# EUROPÄISCHE PATENTANMELDUNG

(11) **EP 3 118 164 A1**
(43) Veröffentlichungstag der Anmeldung: **18.01.2017**
(21) Anmeldenummer: 16178542.3
(22) Anmeldetag: 08.07.2016
(51) Int. Cl.: C02F 1/28, B01D 15/08, B01J 20/08, B01J 20/10, B01J 20/28, B01J 20/34, C02F 1/467, C02F 1/42

(54) **VERFAHREN ZUR REGENERIERUNG EINES ALS ADSORPTIONSFILTER AUSGEBILDETEN KEIMFILTERS UND VORRICHTUNG ZUR DESINFIZIERUNG VON WASSER**

(30) Priorität: 14.07.2015 DE 202015103696 U
(71) Anmelder: Grünbeck Wasseraufbereitung GmbH, 89420 Höchstäd a.d. Donau (DE)
(72) Erfinder: Söcknick, Ralf, 70806 Kornwestheim (DE)
(74) Vertreter: Charrier Rapp & Liebau

(57) **Zusammenfassung**

Die Erfindung betrifft ein Verfahren zur Regenerierung eines als Adsorptionsfilter ausgebildeten Keimfilters (1, 2) zur Desinfizierung von Wasser, wobei der Keimfilter (1, 2) ein elektroaktives Filtermaterial (5) mit einem in wässriger Umgebung elektrokinetischen, insbesondere elektropositiven Potential (Zeta-Potential) enthält, an dem sich im Wasser enthaltene Mikroorganismen, insbesondere Viren und Keime, durch Elektroadsorption anlagern. Um eine effiziente und einfache Regenerierung des Keimfilters zu ermöglichen, sieht die Erfindung vor, dass der Keimfilter (1, 2) zur Regenerierung mit einer wässrigen Regenerierlösung beaufschlagt wird, wobei die Regenerierlösung ein Chloridsalz enthält. Die Erfindung betrifft ferner eine Vorrichtung zur Desinfizierung von Wasser, welche einen Keimfilter sowie eine Regeneriereinrichtung (12) umfasst, welche zur Regenerierung des Keimfilters (1) in vorgegebenen Regenerierphasen eine wässrige Regenerierlösung, welche ein Chloridsalz enthält, durch das Filtermaterial (5) des Keimfilters (1) leitet.

## Beschreibung

Die Erfindung betrifft ein Verfahren zur Regenerierung eines als Adsorptionsfilter ausgebildeten Keimfilters zur Desinfizierung von Wasser gemäß Anspruch 1, sowie eine Vorrichtung zur Desinfizierung von Wasser gemäß dem Oberbegriff des Anspruchs 8.

Aus dem Stand der Technik sind unterschiedliche Filter und Filtrationsverfahren bekannt, um Partikel aus einer Flüssigkeit, wie z.B. Wasser, zu filtrieren. So ist es beispielsweise bekannt, eine zu filtrierende Flüssigkeit durch einen Filter mit einem porösen Filtermedium durchzuleiten, wobei das Filtermedium nach Art eines Siebs in der Flüssigkeit enthaltene Feststoffe zurückhält, während die von den Feststoffen befreite Flüssigkeit (Filtrat) durch das poröse Medium durchfließen kann. Die Filterwirkung solcher Filter beruht darauf, dass die Feststoff-Partikel größer sind als die Poren des Filters und deshalb nicht in das Filtermedium eindringen können. Bei diesen Filtern bildet sich auf dem porösen Filtermedium ein Filterkuchen mit zunehmender Dicke aus, der wiederum als dichter werdendes Filtermedium wirkt. Durch das Anwachsen des Filterkuchens steigt der Strömungswiderstand des Filters während der Filtration immer weiter an, wodurch entweder die Strömungsgeschwindigkeit der Flüssigkeit beim Filtrieren verringert wird oder der Druck auf den Filter erhöht werden muss, um bei höherem Strömungswiderstand die Flüssigkeit mit gleicher Geschwindigkeit durch das Filtermedium zu pressen. Um den Filter zu regenerieren, muss der Filterkuchen regelmäßig entfernt werden. Dies erfolgt bspw. durch Rückspülung des Filters, indem die Filtrierflüssigkeit oder eine Spüllösung in umgekehrter Richtung durch den Filter geleitet wird.

Aus dem Stand der Technik sind weiterhin Tiefenfilter bekannt, bei denen die Abscheidung von Feststoff-Partikeln nicht an der Oberfläche sondern im Innern des Filtermediums durch Adsorption erfolgt. Daneben sind auch Querstromfilter bekannt, bei denen das Filtermedium quer zur Strömungsrichtung der zu filtrierenden Flüssigkeit angeordnet ist. Dabei wird durch Scherkräfte die Ausbildung eines Filterkuchens unterbunden. In Strömungsrichtung reichert sich eine konzentrierte Suspension an, welche zur Regenerierung des Querstromfilters abgeführt werden muss.

Als Filtermedien werden in den bekannten Filtern beispielsweise Filze, Textilmaterialien (bspw. Gewebe), Papier, poröse Festkörper oder auch gewickelte Filterkerzen aus unterschiedlichen Materialien verwendet.

Für die Sterilisation von Wasser müssen pathogene Mikroorganismen, insbesondere Viren und Bakterien, wie z.B. Legionellen und Pseudomonaden, filtriert werden, deren Größe im Bereich von 0,5 bis einigen Mikrometern liegt. Die Sterilisation von Wasser erfolgt bspw. bei der kommunalen Trinkwasseraufbereitung durch Ultrafiltration, wobei bspw. in einer "dead-end"-Filtration ein Wasserstrom mit einem Druck von ca. ca. 1 bar gegen eine UF-Membrane mit einem Partikelrückhalt im Bereich zwischen 2-100 nm gepumpt wird. Durch den permanenten Abfluss des Permeats reichert sich ein Filterkuchen aus den abzutrennenden Feststoffpartikeln auf der Membran an. Der Filterkuchen erhöht den Filtrationswiderstand und damit den Druckverlust über die Membran. Er muss in regelmäßigen Intervallen durch Rückspülung oder chemische Reinigungen entfernt werden. Die Ultrafiltration weist daher den Nachteil eines sehr hohen Strömungswiderstands auf und ist sehr wartungsintensiv. Auch bei einer Ultrafiltration im Querstromverfahren ist ein hoher Filterwiderstand von ca. 1 bar zu überwinden, da das Permeat die dünnen Poren des UF-Filtermaterials durchströmen muss. Dabei entsteht zusätzlich noch der Nachteil eines hohen Abwasseranteils, weil ein Teil des Wassers im Querstrom wegströmt.

Für die Filtration von Mikroorganismen aus Wasser ist aus der WO 03/000407 A1 ein Filtermaterial bekannt, welches einen elektropositiven Textilverbundstoff umfasst. Der Textilverbundstoff enthält ein Gemisch von Nanoaluminiumoxid-teilchen oder -fasern und einer Trägerstruktur, die Glasfasern umfasst. Aufgrund der elektropositiven Eigenschaften des Textilverbundmaterials, die im Wesentlichen durch das elektrokinetische Potenzial (Zeta-Potenzial) des Aluminiumoxids in wässriger Umgebung hervorgerufen werden, ist dieser Filter in der Lage elektronegative Teilchen, die in einer zu filtrierenden Flüssigkeit enthalten sind, durch Elektroadsorption zu binden und dadurch aus der Flüssigkeit zu entfernen. Der aus der WO 03/000407 A1 bekannte Textilverbundstofffilter wird an der Oberfläche einer Filtermembran oder als Filterbett angeordnet und die zu filtrierende Flüssigkeit, beispielsweise Wasser, wird durch die Membran bzw. das Filterbett geleitet. Dabei werden negativ geladene und in der Flüssigkeit enthaltene Teilchen mit einer Teilchengröße von weniger als 1 Mikrometer am Filtermaterial adsorbiert. Dadurch können beispielsweise Mikroorganismen, insbesondere Viren und Bakterien, aus der zu filtrierenden Flüssigkeit, insbesondere Wasser, entfernt werden, um die Flüssigkeit zu desinfizieren bzw. zu sterilisieren. Auch bei diesem Filter hat sich jedoch gezeigt, dass der Strömungswiderstand nach längerem Gebrauch des Filters zur Filtration von Wasser zunimmt und die Adsorptionskapazität des Filters erschöpft. Ein Verfahren zur Regenerierung eines solchen als Adsorptionsfilter ausgebildeten Keimfilters zur Desinfizierung von Wasser ist bislang nicht bekannt.

Hiervon ausgehend liegt der Erfindung die Aufgabe zu Grunde, ein Verfahren zur Regenerierung eines als Adsorptionsfilter ausgebildeten Keimfilters zur Desinfizierung von Wasser aufzuzeigen, welcher ein Filtermaterial mit einem in wässriger Umgebung elektrokinetischen, insbesondere elektropositiven Potential (Zeta-Potential) enthält, an dem sich im Wasser enthaltene Mikroorganismen, insbesondere Viren und Keime, durch Elektroadsorption anlagern können. Eine weitere Aufgabe der Erfindung besteht darin, eine einfach und zuverlässig regenerierbare Vorrichtung zur Desinfizierung von Wasser bereit zu stellen, welche einen als Adsorptionsfilter ausgebildeten Keimfilter aufweist, welcher ein Filtermaterial mit einem in wässriger Umgebung elektrokinetischen Potential (Zeta-Potential) enthält, an dem sich im Wasser enthaltene Mikroorganismen, insbesondere Viren und Keime, durch Elektroadsorption anlagern können. Die Vorrichtung soll dabei bevorzugt zu jeder Zeit zuverlässig desinfiziertes bzw. sterilisiertes Wasser bereit stellen können.

Diese Aufgaben werden mit einem Verfahren zur Regenerierung eines als Adsorptionsfilter ausgebildeten Keimfilters zur Desinfizierung von Wasser gemäß Anspruch 1 sowie mit einer Vorrichtung zur Desinfizierung von Wasser mit den Merkmalen des Anspruchs 8 gelöst. Bevorzugte Ausführungsformen des Verfahrens und der Vorrichtung sind den abhängigen Ansprüchen zu entnehmen.

Die erfindungsgemäße Vorrichtung zur Desinfizierung von Wasser umfasst mindestens einen als Adsorptionsfilter ausgebildeten Keimfilter, der ein Filtermaterial mit einem in wässriger Umgebung elektrokinetischen, insbesondere elektropositiven Potential (Zeta-Potential) enthält, an dem sich im Wasser enthaltene Mikroorganismen, insbesondere Viren und Keime, durch Elektroadsorption anlagern können. Es wurde nun in überraschender Weise fest gestellt, dass ein solcher Keimfilter sehr einfach und zuverlässig durch Einleiten einer wässrigen Regenerierlösung regeneriert werden kann, wenn die Regenerierlösung ein Chloridsalz enthält. Zur Regenerierung des Keimfilters sieht die Erfindung daher eine Regeneriereinrichtung vor, mit der in vorgegebenen Regenerierphasen eine solche Regenerierlösung in den Keimfilter eingeleitet wird, wo die Regenerierlösung das Filtermaterial durchströmt. Bei der Beaufschlagung des Keimfilters mit der Regenerierlösung werden die an dem Filtermaterial adsorbierten Mikroorganismen vom Filtermaterial abgelöst, wodurch der Keimfilter regeneriert wird.

Die Anlagerung der Mikroorganismen am Filtermaterial erfolgt durch Elektroadsorption, aufgrund des elektrokinetischen Potenzials (Zeta-Potenzial) des Filtermaterials und der elektrostatischen Ladung der Mikroorganismen. Hierfür enthält das Filtermaterial des Keimfilters, Substanzen mit einem elektrokinetischen Potenzial in wässriger Umgebung. Beispielsweise enthält das elektroaktive Material ein Metalloxid, insbesondere Aluminiumoxid und/oder Aluminiumhydroxid (Al(OH)₃) und/oder Böhmit (eine Modifikation von Aluminiumhydroxid mit der chemischen Zusammensetzung AlO(OH)) und/oder Zirkonoxid. Es ist bekannt, dass diese Materialien in wässriger Umgebung, und insbesondere im pH-Bereich von 3 - 8, ein elektrokinetisches Potenzial besitzen und dadurch in der Lage sind, negativ geladene Teilchen und Partikel durch Elektroadsorption zu binden. Dadurch können die aufgrund ihrer Zellwandstruktur in der Regel negativ geladenen Mikroorganismen im Wasser an dem elektroaktiven Material des erfindungsgemäßen Filters adsorbiert werden. Es hat sich nun in überraschender Weise gezeigt, dass eine zuverlässige Regenerierung eines solchen Filtermaterials mit einem elektrokinetischen Potenzial (Zeta-Potenzial) durch Beaufschlagung des Filtermaterials mit einer wässrigen Regenerierlösung, welche ein Chloridsalz enthält, möglich ist. Durch das Einleiten der wässrigen Regenerierlösung werden die am Filtermaterial adsorbierten Mikroorganismen vom Filtermaterial gelöst und können mit der Regenerierlösung und/oder einer Spüllösung aus dem Keimfilter entfernt werden. Das Ablösen der Mikroorganismen vom Filtermaterial erfolgt dabei möglicherweise durch einen Verdrängungsmechanismus der mit der Regenerierlösung in das Filtermaterial eingebrachten Ionen des Chloridsalzes, welche in der Regenerierlösung in dissoziierter Form vorliegen, insbesondere der negativ geladenen Chlorionen. Eine alternative Erklärung für das Ablösen der Mikroorganismen vom Filtermaterial bei Einleitung eines in Wassers gelösten Chloridsalzes könnte eine osmotische Reaktion der Mikroorganismen in salzhaltiger Umgebung sein, welche dazu führt, dass den Mikroorganismen Wasser entzogen wird, was eine Reduzierung ihrer (Elektro-) Adsorptionsfähigkeit und dadurch das Ablösen vom Filtermaterial bewirken könnte.

Nach der Beaufschlagung des Keimfilters mit der Regenerierlösung wird dieser zweckmäßig durch Einleiten einer Spüllösung gespült, um die sich im Keimfilter befindliche Regenerierlösung zu verdrängen und um die vom Filtermaterial abgelösten Mikroorganismen aus dem Keimfilter auszuspülen. Als Spüllösung kann bspw. Wasser, bevorzugt desinfiziertes oder sterilisiertes Wasser, eingesetzt werden. Beim Spülen des Keimfilters wird die Spüllösung bevorzugt zunächst in einer Strömungsrichtung durch den Keimfilter geleitet, welche entgegengesetzt zu einer vorgegebenen Filtrierrichtung verläuft und anschließend wird Rohwasser als Erstfiltrat in Filtrierrichtung durch den Keimfilter geleitet und das Erstfiltrat schließlich in einen Abwasserkanal abgeführt.

Bei der Regenerierlösung handelt es sich zweckmäßig um eine wässrige und bevorzugt konzentrierte, insbesondere eine gesättigte Lösung eines Chloridsalzes. Bevorzugt handelt es sich um eine wässrige Kochsalzlösung, und besonders bevorzugt um eine verdünnte oder gesättigte Kochsalzsole. Die wässrige Regenerierlösung weist dabei bevorzugt einen Salzgehalt von wenigstens 3 Gew. % und bevorzugt von wenigstens 5 Gew. % auf. Bei einer gesättigten Kochsalzsole liegt der NaCl-Gehalt bei Raumtemperatur bei ca. 359 g/l.

Die erfindungsgemäße Vorrichtung umfasst mindestens einen als Adsorptionsfilter ausgebildeten ersten Keimfilter, der ein Filtermaterial mit einem in wässriger Umgebung elektrokinetischen, insbesondere elektropositiven Potential (Zeta-Potential) enthält, an dem sich im Wasser enthaltene Mikroorganismen, insbesondere Viren und Keime, durch Elektroadsorption anlagern, sowie eine Regeneriereinrichtung, welche zur Regenerierung des ersten Keimfilters in vorgegebenen Regenerierphasen eine wässrige, ein Chloridsalz enthaltende Regenerierlösung, durch das Filtermaterial des Keimfilters leitet. Die Regeneriereinrichtung enthält dabei ein Regeneriermittelreservoir, in dem ein das Chloridsalz enthaltende Regeneriermittel bevorratet ist, sowie einen Injektor, welcher eine wässrige Lösung des Regeneriermittels zu dem Keimfilter fördert.

Die wässrige Regenerierlösung kann optional neben den gelösten Ionen des Chloridsalzes, nämlich den Alkali- oder Erdalkaliionen sowie den Chlorid-Ionen des Salzes, zusätzlich noch im Wasser als hypochlorige Säure dissoziiertes Chlorgas enthalten. Dies ermöglicht beim Regenerieren des Filters gleichzeitig eine Abtötung der am Filtermaterial adsorbierten Mikroorganismen durch die keimtötende Wirkung des Chlors. Zur Erzeugung der wässrigen Regenerierlösung wird dafür eine verdünnte oder konzentrierte Lösung eines Chloridsalzes einer Elektrolyseeinrichtung zugeführt und von dieser in die wässrige Regenerierlösung umgesetzt, welche dann neben den gelösten Ionen des Chloridsalzes noch als hypochlorige Säure dissoziiertes Chlorgas enthält.

Das Filtermaterial des Keimfilters ist zweckmäßig als elektropositiver Textil-Verbundstoff ausgebildet, der insbesondere ein Gemisch von Mikro- oder Nanoteilchen oder Fasern eines Metalloxids, wie z.B. Aluminiumoxid oder Aluminiumhydroxid oder Böhmit, sowie ein faseriges Trägermaterial, beispielsweise aus Polymer-, Carbon- oder Glasfasern, enthält oder vollständig aus einem solchen Gemisch besteht. Besonders zweckmäßig ist dabei ein Gemisch aus Aluminiumoxid- bzw. Aluminiumhydroxid- oder Böhmit-Fasern mit einem Faserdurchmesser im Bereich von wenigen Nanometern bis zu 10 µm und einem faserigen Trägermaterial, bspw. ein Faservlies aus Carbon- oder Glasfasern. Als besonders geeignet haben sich dabei aluminiumhaltige Fasern mit einem Durchmesser im Nanometerbereich und insbesondere im Bereich von 2 bis 100 nm und einem Verhältnis von Länge zu Durchmesser von mehr als 5 erwiesen.

Bei dem Filtermaterial des Keimfilters kann es sich auch um ein keramisches Trägermaterial handeln, welches mit einer Beschichtung versehen ist, die ein Metalloxid und/oder ein Metallhydroxid enthält.

Um (auch) positiv geladene Teilchen aus dem Wasser am Filter zu adsorbieren, ist es zweckmäßig, wenn das Filtermaterial des Keimfilters alternativ oder zusätzlich ein Silikat, insbesondere Aluminium- oder Calzium-Silikat enthält. Solche Silikate weisen in wässriger Umgebung ein negatives elektrokinetisches Potenzial auf und sind deshalb in der Lage, positiv geladene Teilchen aus der Flüssigkeit durch Elektroadsorption an dem Filtermaterial zu binden.

In einer bevorzugten Ausführungsform ist das Filtermaterial des Keimfilters als Wickelfilter oder als Plisseefilter ausgebildet. Zur einfacheren Handhabung des Filters, beispielsweise beim Einsetzen des Filters in eine erfindungsgemäße Vorrichtung zur Desinfizierung von Wasser und zum Austausch eines verbrauchten Filters, hat es sich als zweckmäßig erwiesen, den Keimfilter als Filterkartusche auszubilden. Hierfür ist es bspw. zweckmäßig, das Filtermaterial in einem rohr- oder quaderförmigen Gehäuse aus einem wasserdichten Material anzuordnen oder um den zylindrisch aufgewickelten Wickelfilter bzw. das zylindrisch geformte Filterplissee einen haltenden Netzkäfig anzuordnen. Der Netzkäfig kann dabei bspw. aus einem Kunststoff- oder Drahtgeflecht gebildet sein.

Die erfindungsgemäße Vorrichtung kann neben dem ersten Keimfilter wenigstens einen zweiten Keimfilter umfassen, der parallel zum ersten Keimfilter geschaltet ist bzw. pendelnd dazu betreibbar ist. Dies ermöglicht, dass immer ein Keimfilter zum Betrieb zur Verfügung steht, während der oder die anderen Keimfilter regeneriert werden. Zusätzlich kann die erfindungsgemäße Vorrichtung neben dem ersten Keimfilter und/oder dem zweiten Keimfilter noch eine Wasserenthärtungseinrichtung enthalten, welche einen Ionenaustauscher und insbesondere ein regenerierbares Ionenaustauscherharz (Kationenharz) enthält und zweckmäßig in Serie zu dem ersten Keimfilter und/oder dem zweiten Keimfilter oder der Parallelschaltung des ersten Keimfilters und des zweiten Keimfilters geschaltet ist. Dies stellt sicher, dass das in einem der Keimfilter entkeimte Wasser enthärtet wird, indem die härtebildenden Ionen (Kalzium- und Magnesium-Ionen) im Wasser gegen Kationen des Ionenaustauschers (insbesondere Natrium-Ionen) ausgetauscht werden. Hierfür weist die Vorrichtung zweckmäßig einen Rohwasserzulauf und einen Produktwasserablauf auf und die beiden Keimfilter stehen in einer Parallelschaltung zueinander stromaufwärts mit dem Rohwasserzulauf und stromabwärts in Reihe mit der Wasserenthärtungseinrichtung in Verbindung. Zum Desinfizieren des über den Rohwasserzulauf zugeführten Wassers wird der Wasserstrom bevorzugt in mindestens zwei Teilströme aufgeteilt und in einer Betriebsphase der Vorrichtung wird ein erster Teilstrom durch den ersten Keimfilter und ein zweiter Teilstrom durch den zweiten Keimfilter geleitet und die beiden Teilströme stromabwärts der Keimfilter zum Produktwasserablauf geleitet. Zum Regenerieren der Keimfilter wird in einer Regenerierphase zumindest ein Teilstrom des vom Rohwasserzulauf zugeführten Wassers durch einen der beiden Keimfilter geleitet, während der andere Keimfilter regeneriert wird. Dadurch wird eine Regenerierung eines der Keimfilters bei laufendem Betrieb der Vorrichtung ermöglicht. Weiterhin wird gewährleistet, dass die Keimfilter mit demselben Regeneriermittel bzw. mit derselben Regenerierlösung regeneriert werden können wie die Wasserenthärtungseinrichtung, deren Ionenaustauscher ebenfalls mit einer wässrigen Chloridlösung, insbesondere einer Kochsalzlösung, regeneriert werden kann, indem die bei der Wasserenthärtung aufgenommenen Kalzium- und Magnesium-Ionen in dem Ionenaustauscher gegen Kationen (insbesondere Natrium-Ionen) der Chlorid-Regenerierlösung ausgetauscht werden. Zur Regenerierung des Austauscherharzes der Wasserenthärtungseinrichtung kann dieses mit einer wässrigen Lösung des in dem Regeneriermittelreservoir bevorraten Regeneriermittels beaufschlagt werden. Zweckmäßig wird dabei die Salzkonzentration in der Regenerierlösung für die Wasserenthärtungseinrichtung an die Erfordernisse für die Regenerierung des darin verwendeten Ionenaustauschers angepasst. Eine Regenerierung eines erschöpften KationenAustauscherharzes kann bspw. mit einer 8-12 %-igen Natriumchlorid-Lösung erfolgen. Bevorzugt wird zur Regenerierung des Ionenaustauschers der Wasserenthärtungseinrichtung dieselbe Regenerierlösung verwendet, die auch zur Regenerierung der Keimfilter eingesetzt wird, wobei es sich dabei zweckmäßig um eine Natriumchlorid-Lösung mit einem Salzgehalt von 8-12 Gew. % handelt.

Diese und weitere Vorteile der Erfindung ergeben sich aus den nachfolgend unter Bezugnahme auf die begleitenden Zeichnungen näher beschriebenen Ausführungsbeispielen. Die Zeichnungen zeigen:
- **Figur 1:**: Schematische Darstellung eines ersten Ausführungsbeispiels einer erfindungsgemäßen Vorrichtung zur Desinfizierung von Wasser mit einem als Adsorptionsfilter ausgebildeten Keimfilter während einer Betriebsphase;
- **Figur 2:**: Schematische Darstellung verschiedener Phasen während der Regeneration des Keimfilters der Vorrichtung von Figur 1;
- **Figur 3:**: Schematische Darstellung eines zweiten Ausführungsbeispiels einer erfindungsgemäßen Vorrichtung zur Desinfizierung von Wasser mit einem ersten Keimfilter und einem parallel dazu angeordneten zweiten Keimfilter während einer Betriebsphase;
- **Figur 4:**: Schematische Darstellung verschiedener Phasen während der Regeneration eines der beiden Keimfilter der Vorrichtung von Figur 3;
- **Figur 5:**: Schematische Darstellung eines dritten Ausführungsbeispiels einer erfindungsgemäßen Vorrichtung zur Desinfizierung und Enthärtung von Wasser mit einem ersten Keimfilter, einem parallel dazu angeordneten zweiten Keimfilter und einer Wasserenthärtungseinrichtung, während einer Betriebsphase;
- **Figur 6:**: Schematische Darstellung einer als Wickelfilter ausgebildeten Ausführungsform eines Keimfilters zur Verwendung in den Vorrichtungen der Figuren 1 und 2;
- **Figur 7:**: perspektivische Darstellung einer als Plisseefilter ausgebildeten Ausführungsform eines Keimfilters zur Verwendung in den Vorrichtungen der Figuren 1 und 2;

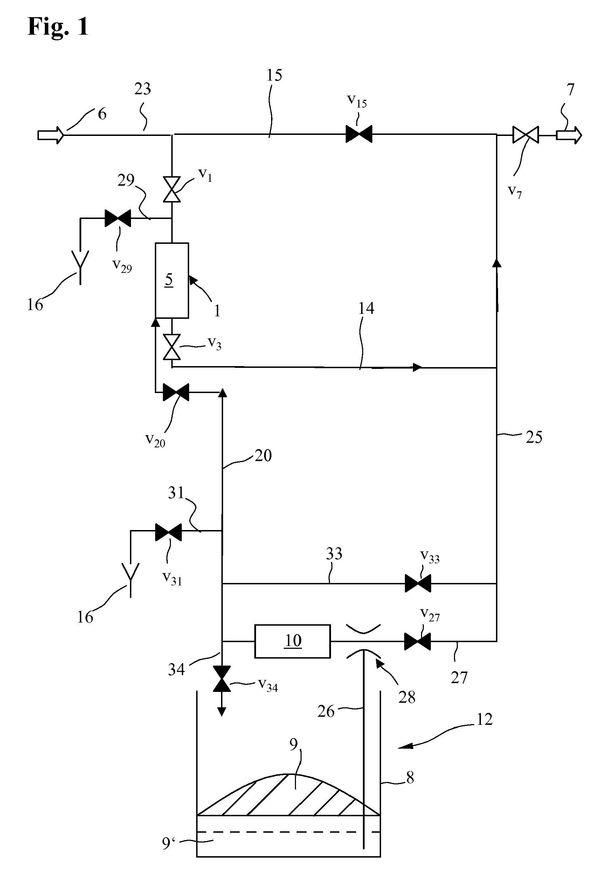

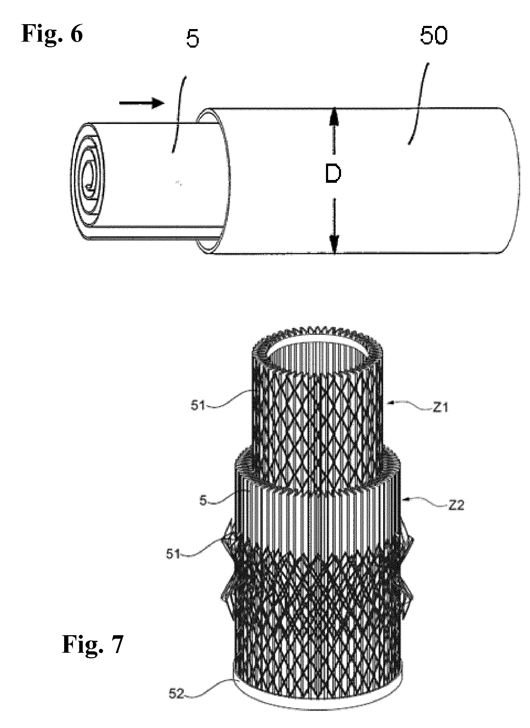

In Fig. 1 ist schematisch ein erstes Ausführungsbeispiel einer erfindungsgemäßen Vorrichtung zur Wasserbehandlung in einer Betriebsphase gezeigt. Die Vorrichtung umfasst einen Rohwasserzulauf 6 und einen Produktwasserablauf 7. Wenn im folgenden von einer Strömungsrichtung und insbesondere von stromaufwärts bzw. stromabwärts gesprochen wird, bezieht sich dies auf die Strömungsrichtung des zu behandelnden Rohwassers vom Rohwasserzulauf 6 zum Produktwasserablauf 7. Die Vorrichtung umfasst weiterhin einen Keimfilter 1. Der Keimfilter 1 enthält ein Filtermaterial 5, welches in wässriger Umgebung und insbesondere im pH-Bereich von 5 bis 8 ein elektrokinetisches Potential (Zeta-Potential) aufweist. Geeignete Filtermaterialien mit einem in wässriger Umgebung elektrokinetischen, insbesondere elektropositiven Potential wurden eingangs bereits beschrieben. Das Filtermaterial 5 des Keimfilters ist dabei zweckmäßig in einer austauschbaren Filterkartusche enthalten. In den Figuren 6 und 7 sind Ausführungsbeispiele für solche Keimfilter gezeigt. Die Vorrichtung umfasst weiterhin eine Regeneriereinrichtung 12 zur Regenerierung des Keimfilters 1.

Die Vorrichtung von Figur 1 enthält zur Verbindung des Keimfilters 1 mit dem Rohwasserzulauf 6, dem Produktwasserablauf 7 und der der Regeneriereinrichtung 12 folgende Leitungen, welche als Rohr- oder Schlauchleitungen ausgebildet sein können, und folgende Ventile zum Öffnen und Schließen der Leitungen (die gezeigten Ventile sind dabei schwarz eingezeichnet, wenn das Ventil geschlossen ist und weiß bei geöffnetem Ventil):
Der Keimfilter 1 ist über eine Zufuhrleitung 23 mit dem Rohwasserzulauf 6 verbunden. Über den Rohwasserzulauf 6 wird dem Keimfilter 1 unter Druck stehendes Rohwasser zugeführt und in einer Filtrierrichtung durch das Filtermaterial 5 des Keimfilters 1 geleitet. Aufgrund des elektrokinetischen Potentials des Filtermaterials 5 werden dabei im Rohwasser enthaltene und elektrostatisch geladene Mikroorganismen, wie z. B. Viren und Keime, insbesondere Legionellen und Pseudomonaden, durch Elektroadsorption an dem Filtermaterial 5 des Keimfilters 1 adsorbiert und dadurch aus dem Rohwasser entfernt. Sowohl stromaufwärts als auch stromabwärts des Keimfilters 1 ist jeweils ein Ventil V1 bzw. V3 vorgesehen. Zwischen dem Filter V1 und dem Keimfilter 1 ist eine Abzweigleitung 29 mit einem Ventil V29 vorgesehen, welche in einen Abwasserkanal 16 mündet.

Der Keimfilter 1 verfügt über einen Ablauf, an dem das desinfizierte Wasser aus dem Filter abgeführt wird. Dieser Ablauf ist über eine Verbindungsleitung 14, mit einer Produktwasserleitung 25 verbunden, welche zu dem Produktwasserablauf 7 führt. Vor dem Produktwasserablauf 7 ist ein Ventil V7 vorgesehen. Das in dem Keimfilter 1 desinfizierte Produktwasser wird über den Produktwasserablauf 7 aus der Vorrichtung abgeleitet und zu einem (nicht dargestellten) Verbraucher oder einem Sammelreservoir geleitet wird. Parallel zu der Verbindungsleitung 14 ist eine Bypassleitung 15 mit einem Bypassventil V15 vorgesehen, über welche das Rohwasser vom Rohwasserzulauf 6 bei geöffnetem Bypassventil V15 direkt und unter Umgehung des Keimfilters 1 in die Produktwasserleitung 25 geleitet werden kann.

Zur Regenerierung des Keimfilters 1 umfasst die in Fig. 1 schematisch dargestellte Vorrichtung eine Regeneriereinrichtung 12, welche ein Regeneriermittelreservoir 8 umfasst, in dem ein Regeneriermittel 9 bevorratet ist. Bei dem Regeneriermittel 9 handelt es sich um ein (festes) Regeneriersalz, insbesondere ein Chloridsalz und bevorzugt um Kochsalz (NaCl). Im Folgenden wird ein bevorzugtes Ausführungsbeispiel der Erfindung beschrieben, in dem es sich bei dem Chloridsalz um Kochsalz handelt.

Das Regeneriermittelreservoir 8 verfügt über einen Wasserzulauf, über den Wasser in das Regeneriermittelreservoir 8 eingeleitet werden kann. Bei Einleitung von Wasser in das Regeneriermittelreservoir 8 löst sich das Regeneriermittel 9 im Wasser auf und bildet eine zweckmäßig gesättigte Regeneriersalzlösung 9', welche sich auf dem Boden des Regeneriermittelreservoirs 8 absetzt. Bei dem bevorzugtes Ausführungsbeispiel der Erfindung handelt es sich bei der Regeneriersalzlösung 9' um eine gesättigte Kochsalzsole. Zur Entnahme der Kochsalzsole umfasst die Regeneriereinrichtung 12 ein Steigrohr 26, welches am unteren Ende in die Kochsalzsole eingetaucht ist und am oberen Ende in eine Regenerierleitung 27 mündet. Zur Überführung der wässrigen Regeneriersalzlösung 9' (Kochsalzsole) in die Regenerierleitung 27 ist ein Injektor 28 vorgesehen, der eine Pumpe enthalten kann. Zweckmäßig ist der Injektor 28 als Wasserstrahlpumpe ausgebildet. Hierfür ist ein Ende der Regenerierleitung 27 mit der Produktwasserleitung 25 verbunden, so dass Wasser aus der Produktwasserleitung 25 in die Regenerierleitung 27 geleitet werden kann, wo an der Mündung der Steigleitung 26 aufgrund des Strömungsdrucks des durch die Regenerierleitung 27 strömenden Wassers ein Unterdruck entsteht, durch den die wässrige Regeneriersalzlösung 9' (Kochsalzsole) aus dem Regeneriermittelreservoir 8 in die Regenerierleitung 27 angesaugt wird. Dabei wird die konzentrierte Regeneriersalzlösung 9' durch das in der Regenerierleitung 27 geführte Wasser verdünnt.

In der Regenerierleitung 27 ist (in Strömungsrichtung des von der Produktwasserleitung 25 kommenden Wassers gesehen) stromabwärts des Injektors 28 eine Elektrolyseeinrichtung 10 angeordnet. Dieser wird die vom Injektor 28 aus dem Steigrohr 26 angesaugte Regeneriersalzlösung zugeführt. Die Elektrolyseeinrichtung 10 setzt die Regeneriersalzlösung 9', welche durch das über die Produktwasserleitung 25 in die Regenerierleitung 27 einströmende Wasser verdünnt wird, in eine wässrige Regenerierlösung um, welche Alkali- oder Erdalkaliionen, sowie Chlorid-Ionen aus der wässrigen Chloridsalzlösung und im Wasser als hypochlorige Säure dissoziiertes Chlorgas enthält. In dem bevorzugten Ausführungsbeispiel der Erfindung enthält die wässrige Regenerierlösung Natrium- und Chlor-Ionen der Kochsalzsole, sowie im Wasser als hypochlorige Säure dissoziiertes Chlorgas.

Zwischen der Elektrolyseeinrichtung 10 und dem Keimfilter 1 ist eine Regeneriermittelleitung 20 angeordnet, über welche die in der Elektrolyseeinrichtung 10 erzeugte wässrige Regenerierlösung zum Keimfilter 1 geleitet werden kann. Von der Regeneriermittelleitung 20 zweigt vor dem Keimfilter 1 eine Abzweigung 31 ab, welche ein Ventil V31 enthält und in einen Abwasserkanal 16 mündet. Nach der Abzweigung 31 und vor dem Keimfilter 1 ist in der Regeneriermittelleitung 20 ein Ventil V20 vorgesehen.

Parallel zur Regenerierleitung 27 ist eine Bypassleitung 33 mit einem darin angeordneten Ventil V33 vorgesehen. Diese Bypassleitung 33 verbindet die Regeneriermittelleitung 20 mit der Produktwasserleitung 25 unter Umgehung der Regeneriereinrichtung 12.

Von der Regeneriermittelleitung 20 zweigt ferner eine Abzweigung 34 mit einem darin angeordneten Ventil V34 ab. Die Abzweigung 34 mündet in das Regeneriermittelreservoir 8.

In der in Figur 1 gezeigten Betriebsphase wird die oben beschriebene Vorrichtung zur Erzeugung von desinfiziertem Wasser wie folgt betrieben:
Das zu behandelnde Rohwasser wird der Vorrichtung über den Rohwasserzulauf 6 zugeleitet und über das geöffnete Ventil V1 in den Keimfilter 1 eingeleitet. Dabei sind die Bypassventile V15 und V33 sowie die Ventile V29, V31 und V27 geschlossen. Das Rohwasser wird unter Druck durch das Filtermaterial 5 des Keimfilters 1 geleitet und dort durch Elektroadsorption desinfiziert. Das stromabwärts des Keimfilters 1 in der Leitung 24 angeordnete Ventile V3 ist geöffnet, so dass das im Filtermaterial 5 desinfizierte Wasser über die Leitung 14 in die Produktwasserleitung 25 und von dort bei geöffnetem Ventil V7 zum Produktwasserablauf 7 strömen kann.

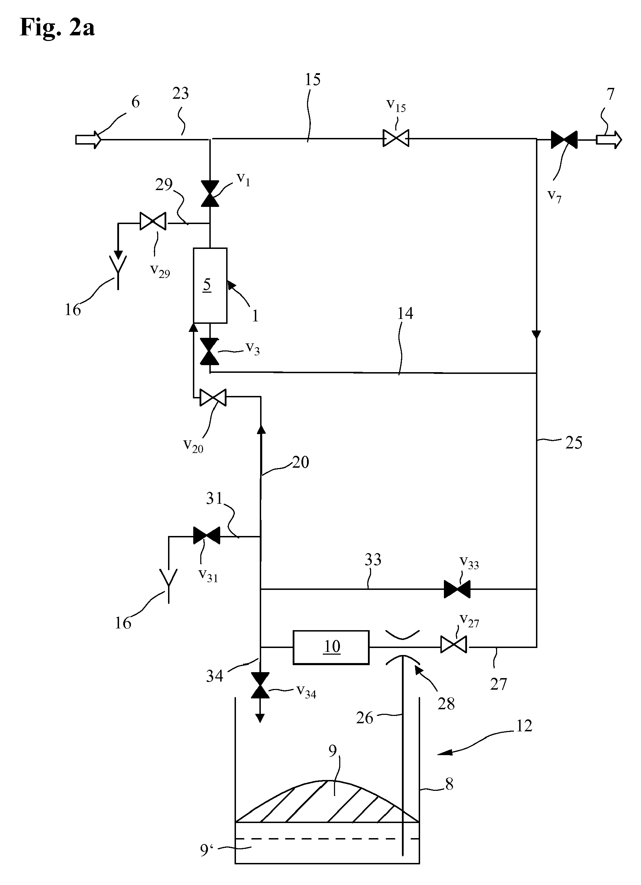

Zur Regenerierung des Keimfilters 1 wird die oben beschriebene Vorrichtung in vorgegebenen Regenerierphasen wie folgt verwendet:
Ein erster Schritt der Regenerierphase ist in Figur 2a schematisch dargestellt. In diesem ersten Schritt wird der Keimfilter 1 mit der wässrigen Regenerierlösung beaufschlagt. Hierfür werden das stromaufwärtige Ventil V1 und das stromabwärtige Ventil V3 des Keimfilters 1 sowie das Ventil 7 vor dem Produktwasserablauf 7 geschlossen, während das Bypassventil V15 sowie das Ventil V27 geöffnet werden. Durch das Öffnen der Ventile V15 und V27 kann Rohwasser durch die Bypassleitung 15 direkt in die Produktwasserleitung 25 und von dort in die Regenerierleitung 27 strömen. Das durch die Regenerierleitung 27 strömende Wasser saugt über die oben bereits beschriebene Wirkung des Injektors 28 die (konzentrierte) Regeneriersalzlösung 9' (Kochsalzsole) aus dem Regeneriermittelreservoir 8 an und leitet diese zur Elektrolyseeinrichtung 10, welche die Regeneriersalzlösung in die wässrige Regenerierlösung umsetzt. Die wässrige Regenerierlösung enthält in dem bevorzugten Ausführungsbeispiel, bei dem es sich bei dem Regeneriermittel 9 um Kochsalz (NaCl) handelt, einerseits im Wasser gelöste Natrium- und Chlorid-Ionen sowie im Wasser als hypochlorige Säure dissoziiertes Chlorgas.

Die wässrige Regenerierlösung wird über die Regeneriermittelleitung 20 bei geschlossenen Ventil V34 und geöffnetem Ventil V20 dem Keimfilter 1 zugeführt und dort unter Druck durch das Filtermaterial 5 geleitet. Dabei wird das Filtermaterial 5 regeneriert, indem die dort beim Desinfizieren des Rohwassers durch Elektroadsorption angelagerten Mikroorganismen vom Filtermaterial 5 abgelöst werden. Die Ablösung der Mikroorganismen vom Filtermaterial erfolgt dabei wahrscheinlich aufgrund elektrostatischer Verdrängungsmechanismen, die durch die in der wässrigen Regenerierlösung enthaltenen Chloridionen hervorgerufen werden, oder durch eine osmotische Reaktion in den Mikroorganismen, denen in der salzigen Umgebung der Regenerierlösung Wasser entzogen wird, wodurch sie ihre Adsorptionsfähigkeit verlieren. Gleichzeitig erfolgt ein Abtöten der Mikroorganismen in dem Keimfilter 1 durch das in der wässrigen Regenerierlösung als hypochlorige Säure dissoziierte Chlorgas. Auf diese Weise wird der Keimfilter 1 zuverlässig entkeimt, indem einerseits die am Filtermaterial 5 adsorbierten Mikroorganismen abgelöst und diese durch die Wirkung des Chlorgases zumindest teilweise abgetötet werden. Die zumindest teilweise abgetöteten Mikroorganismen werden mit der wässrigen Regenerierlösung aus dem Keimfilter 1 abgeführt und in die Abzweigung 29 geleitet. Das in der Abzweigung 29 angeordnete Ventil V29 ist dabei geöffnet, so dass die wässrige Regenerierlösung durch das geöffnete Ventil V29 in den Abwasserkanal 16 abfließen und dadurch entsorgt werden kann.

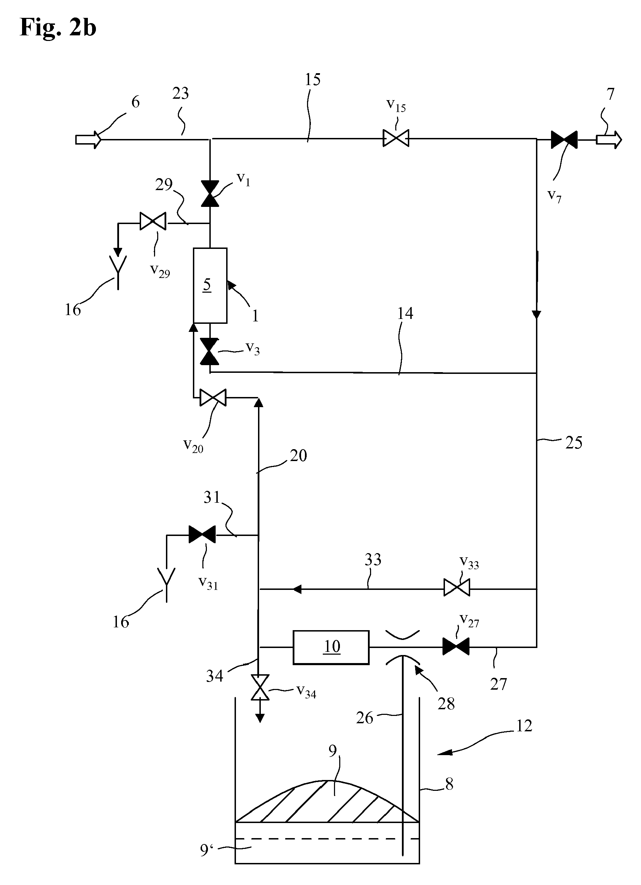

In einem zweiten Schritt der Regenerierphase zur Regeneration des Keimfilters 1, welcher schematisch in Figur 2b gezeigt ist, wird die sich in den Leitungen sowie in dem Keimfilter 1 befindliche wässrige Regenerierlösung ausgespült. Nach Beendigung des ersten Schritts der Regenerierphase wird hierfür zunächst die Einleitung der Regeneriersalzlösung 9' mittels des Injektors 28 in die Regenerierleitung 27 gestoppt. Dies erfolgt zweckmäßig über eine automatisierte Steuerung, welche die Einleitung der konzentrierten Regeneriersalzlösung in die Regenerierleitung 27 automatisch einstellt, sobald eine vorgegebene Menge an wässriger Regeneriersalzlösung 9' in die Regenerierleitung 27 eingeleitet worden ist. Hierfür ist zweckmäßig am Injektor 28 oder in der Regenerierleitung 27 ein Durchflusssensor vorgesehen, der die in die Regenerierleitung 27 eingeleitete Menge an wässriger Regeneriersalzlösung 9' erfasst. Zur Beendigung des Einleitens weiterer Regeneriersalzlösung in die Regenerierleitung 27 ist bspw. in dem Regeneriermittelreservoir 28 ein Schwimmerventil vorgesehen, welches die Steigleitung 26 verschließt, sobald eine vorgegebene Menge an Regeneriersalzlösung 9' in die Regenerierleitung 27 eingeleitet worden ist. Gleichzeitig wird das sich in der Regenerierleitung 27 befindliche Ventil V27 geschlossen. Gleichzeitig wird die parallel zur Regenerierleitung 27 verlaufende Bypassleitung 33 durch Öffnen des Ventils V33 geöffnet, so dass eine direkte Verbindung zwischen der Produktwasserleitung 25 und der Regeneriermittelleitung 20 (unter Umgehung der Regeneriereinrichtung 12) entsteht. Der von dem Rohwasserzulauf 6 kommende Rohwasserstrom kann somit von der Produktwasserleitung 25 durch die Bypassleitung 33 in die Regeneriermittelleitung 20 und von dort bei geöffnetem Ventil V20 in den Keimfilter 1 strömen.

Ein erster Teilstrom des in der Regeneriermittelleitung 20 geführten Rohwassers zweigt in die Abzweigung 34 ab. Das in der Abzweigung 34 vorgesehene Ventil V34 wird gleichzeitig mit dem Ventil V33 geöffnet, so dass durch die Abzweigung 34 Wasser in das Regeneriermittelreservoir 8 fließen kann. Dadurch wird der Wasservorrat im Regeneriermittelreservoir 8 wieder aufgefüllt, bis das ursprünglich darin vorhandene Niveau an konzentrierter Regeneriersalzlösung 9' wieder vorhanden ist.

Gleichzeitig strömt ein zweiter Teilstrom des in der Regeneriermittelleitung 20 geführten Wassers als Spülwasser in den Keimfilter 1 und verdrängt dort die sich darin befindliche (restliche) Regenerierlösung. Auf diese Weise wird das Filtermaterial 5 des Keimfilters 1 mit Rohwasser gespült. Das durch den Keimfilter 1 als Spülwasser geleitete Rohwasser wird schließlich bei geöffnetem Ventil V29 über den Abzweig 29 in den Abwasserkanal 16 geleitet.

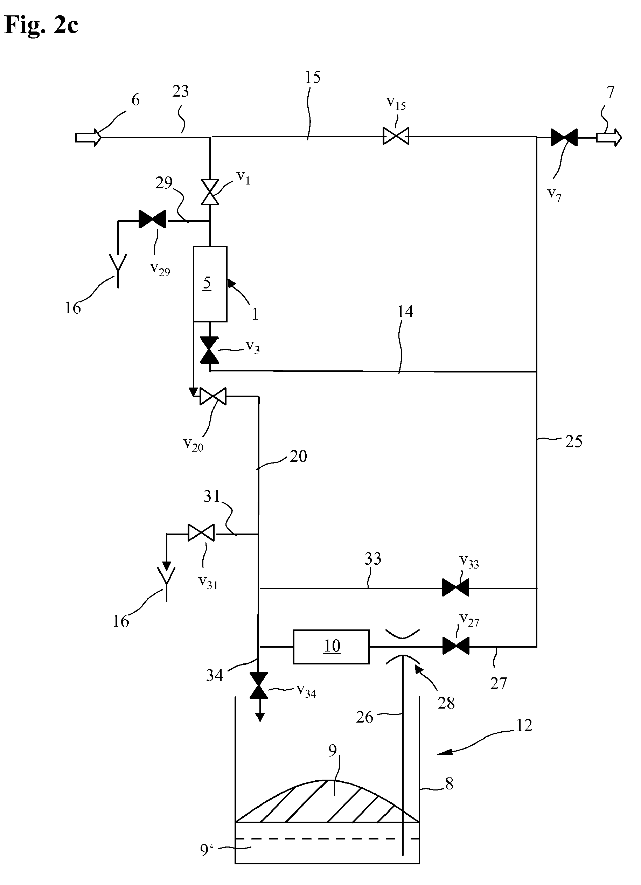

Anschließend beginnt ein in Figur 2c schematisch gezeigter dritter Schritt der Regenerierphase, in dem in dem Keimfilter 1 ein Erstfiltrat erzeugt und dieses in den Abwasserkanal 16 geleitet wird. Hierfür werden die Ventile V1 und V31 geöffnet. Durch Öffnung des Ventils V1 kann Rohwasser aus dem Rohwasserzulauf 6 in den Keimfilter 1 strömen. Da sich in dem Keimfilter 1 noch Reste der wässrigen Regenerierlösung befinden können, wird das sich bei Durchleiten des Rohwassers durch den Keimfilter 1 in diesem dritten Schritt erzeugte Erstfiltrat jedoch noch nicht dem Produktwasserablauf 7 zugeführt, sondern vielmehr zur Entsorgung in den Abwasserkanal 16 geleitet. Hierfür kann das Erstfiltrat aus dem Keimfilter 1 über die geöffnete Regeneriermittelleitung 20 bei geöffnetem Ventil V31 durch den Abzweig 31 verlassen, der in den Abwasserkanal 16 mündet. Dabei wird das in der Abzweigung 34 angeordnete Ventil V34 geschlossen, um zu verhindern, dass das Erstfiltrat in das Regeneriermittelreservoir 8 fließen kann. Auch das in der Bypassleitung 33 angeordnete Ventil V33 wird geschlossen, damit kein Erstfiltrat in die Produktwasserleitung 25 strömen kann. Damit ist die Regenerierphase beendet und die Vorrichtung kann wieder in der in Fig. 1 gezeigten Betriebsphase betrieben werden, in der sich der Keimfilter 1 in Betrieb befindet, um desinfiziertes Wasser zu erzeugen.

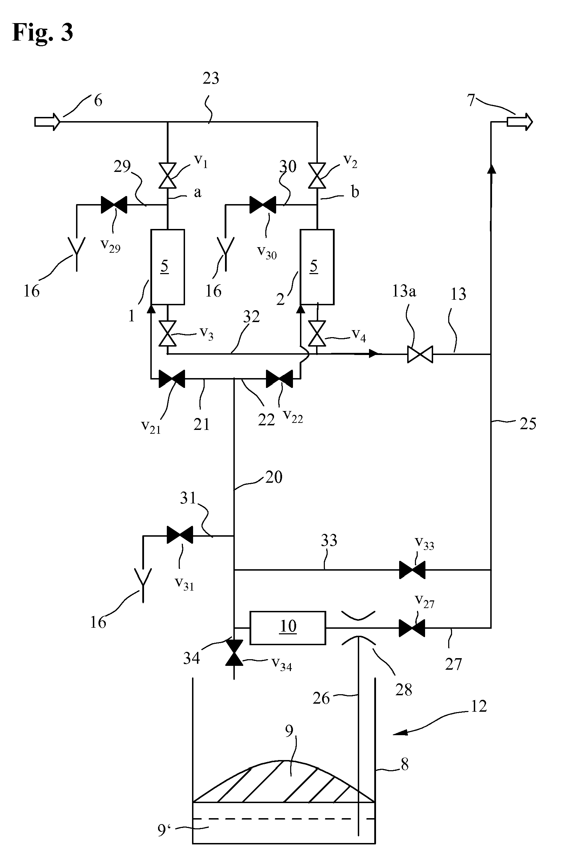

In Fig. 3 ist ein zweites Ausführungsbeispiel einer erfindungsgemäßen Vorrichtung schematisch gezeigt. In diesem Ausführungsbeispiel umfasst die Vorrichtung einen ersten Keimfilter 1 und einen zweiten Keimfilter 2, welche in einer Parallelschaltung angeordnet sind. In Fig. 3 ist die Vorrichtung in ihrer Betriebsphase dargestellt, welche im Wesentlichen der Betriebsphase der Vorrichtung von Fig. 1 entspricht.

Der Vorteil der Vorrichtung von Fig. 3 besteht darin, dass durch die beiden Keimfilter 1, 2 zu jeder Zeit, und insbesondere auch während der Regenerierphase, desinfiziertes Wasser bereitgestellt werden kann. Auch während der Regenerierphasen wird nämlich zumindest ein Teilstrom des Rohwassers durch einen der beiden Keimfilter 1, 2 geleitet und dadurch desinfiziert.

Die Vorrichtung von Figur 3 umfasst wiederum einen Rohwasserzulauf 6 und einen Produktwasserablauf 7, einen ersten Keimfilter 1 und einen zweiten Keimfilter 2, welche in einer Parallelschaltung angeordnet sind, sowie eine Regeneriereinrichtung 12. Jeder der beiden Keimfilter 1, 2 enthält ein Filtermaterial 5, welches in wässriger Umgebung ein elektrokinetisches Potential (Zeta-Potential) aufweist.

Die Vorrichtung von Figur 3 enthält zur Verbindung der beiden Keimfilter 1, 2, und der Regeneriereinrichtung 12 folgende Leitungen, welche als Rohr- oder Schlauchleitungen ausgebildet sein können, und folgende Ventile zum Öffnen und Schließen der Leitungen (die gezeigten Ventile sind dabei schwarz eingezeichnet, wenn das Ventil geschlossen ist und weiß bei geöffnetem Ventil):
Die Parallelschaltung der beiden Keimfilter 1, 2 ist über eine Zufuhrleitung 23 mit dem Rohwasserzulauf 6 verbunden. Über den Rohwasserzulauf 6 wird der Parallelschaltung der beiden Keimfilter 1, 2 unter Druck stehendes Rohwasser zugeführt und in einer Filtrierrichtung durch den ersten Keimfilter 1 und den zweiten Keimfilter 2 geleitet. Aufgrund des elektrokinetischen Potentials des Filtermaterials 5 der beiden Keimfilter 1, 2 werden dabei im Rohwasser enthaltene und elektrostatisch geladene Mikroorganismen durch Elektroadsorption an dem Filtermaterial 5 der beiden Keimfilter 1, 2 adsorbiert und dadurch aus dem Rohwasser entfernt. In der Parallelschaltung der Keimfilter 1, 2 ist sowohl stromaufwärts als auch stromabwärts jeweils ein Ventil V1, V2 bzw. V3, V4 vorgesehen. Stromaufwärts der Keimfilter ist in jedem Zweig (a, b) der Parallelschaltung eine Abzweigleitung 29, 30 vorgesehen, welche jeweils in einen Abwasserkanal 16 mündet. In jeder Abzweigleitung 29, 30 ist ein Ventil V29 bzw. V30 angeordnet.

Stromabwärts der Parallelschaltung der beiden Keimfilter 1, 2 ist eine Verbindungsleitung 13 mit einem Ventil 13a vorgesehen, welche einerseits mit der Parallelschaltung der beiden Keimfilter 1, 2 und andererseits mit der Produktwasserleitung 25 verbunden ist. Das in den beiden Keimfiltern 1, 2 durch Elektroadsorption desinfizierte Rohwasser wird über die Leitungen 13 und 25 dem Produktwasserablauf 7 zugeführt, über den das in den Keimfiltern 1, 2 desinfizierte Produktwasser aus der Vorrichtung abgeleitet und zu einem (nicht dargestellten) Verbraucher oder einem Sammelreservoir geleitet wird.

Zur Regenerierung der beiden Keimfilter 1, 2 umfasst die in Fig. 3 dargestellte Vorrichtung wiederum eine Regeneriereinrichtung 12, welche ein Regeneriermittelreservoir 8 umfasst, in dem ein Regeneriermittel 9 bevorratet ist. Die Regeneriereinrichtung 12 von Figur 3 entspricht der Regeneriereinrichtung 12 von Figur 1.

Zwischen der Regeneriereinrichtung 12 und der Parallelschaltung der beiden Keimfilter 1, 2 ist eine Regeneriermittelleitung 20 angeordnet, über welche die in der der Regeneriereinrichtung 12 und insbesondere in der Elektrolyseeinrichtung 10 erzeugte wässrige Regenerierlösung in einer Regenerierphase zu einem der beiden Keimfilter 1 oder 2 geleitet werden kann. Von der Regeneriermittelleitung 20 zweigt (in Strömungsrichtung des Wassers von der Regenerierleitung 27 zur Wasserenthärtungseinrichtung 3 aus gesehen) vor der Parallelschaltung der beiden Keimfilter 1, 2 eine Abzweigung 31 ab, welche ein Ventil V31 enthält und in einen Abwasserkanal 16 mündet.

Parallel zur Regenerierleitung 27 ist wie in dem Ausführungsbeispiel von Figur 1 eine Bypassleitung 33 mit einem darin angeordneten Ventil V33 vorgesehen. Diese Bypassleitung 33 verbindet die Regeneriermittelleitung 20 mit der Produktwasserleitung 25 unter Umgebung der Regeneriereinrichtung 12.

Von der Regeneriermittelleitung 20 zweigt ferner eine Abzweigung 34 mit einem darin angeordneten Ventil V34 ab. Die Abzweigung 34 mündet in das Regeneriermittelreservoir 8.

Das der Abzweigung 34 gegenüber liegende Ende der Regeneriermittelleitung 20 verzweigt in zwei weitere Regeneriermittelleitungen 21, 22 welche zum jeweils stromabwärtigen Ende des ersten Keimfilters 1 und des zweiten Keimfilters 2 führen. In den Regeneriermittelleitungen 21, 22 sind Ventile V21, V22 vorgesehen.

In der in Figur 3 gezeigten Betriebsphase wird die Vorrichtung zur Erzeugung von desinfiziertem Wasser wie folgt betrieben:
Das zu behandelnde Rohwasser wird der Vorrichtung über den Rohwasserzulauf 6 zugeleitet und in der Parallelschaltung der beiden Keimfilter 1, 2 in zwei Teilströme a, b aufgeteilt, wobei ein erster Teilstrom a in den ersten Keimfilter 1 und ein zweiter Teilstrom b in den zweiten Keimfilter 2 geleitet wird. Dabei sind die in den Leitungen der Parallelschaltung der beiden Keimfilter 1, 2 stromaufwärts und stromabwärts der Keimfilter 1, 2 angeordneten Ventile V1, V2 sowie V3 und V4 geöffnet und die in den Abzweigungen 29, 30 angeordneten Ventile V29, V30 sind geschlossen. Die beiden Teilströme a, b des Rohwassers werden unter Druck durch das Filtermaterial 5 der beiden parallel geschalteten Keimfilter 1, 2 geleitet und dort durch Elektroadsorption desinfiziert. Die beiden Teilströme a, b werden nach Durchlauf des ersten Keimfilters 1 bzw. des zweiten Keimfilters 2 am Ende der Parallelschaltung in einer Leitung 32 zusammen geführt und über die geöffnete Leitung 13 in die Produktwasserleitung 25 und zum Produktwasserablauf 7 geführt. Die Ventile V33 und V27 sind dabei geschlossen, so dass kein Produktwasser in den Bypass 33 bzw. in die Regeneriereinrichtung 12 fließen kann.

Zur Regenerierung der beiden Keimfilter 1, 2 wird die oben beschriebene Vorrichtung von Figur 3 in Regenerierphasen wie folgt betrieben, wobei eine Regenerierung eines der beiden Keimfilter 1 oder 2 erfolgt, während der andere Keimfilter 2 oder 1 weiterhin desinfiziertes Wasser zur Verfügung stellt. Zunächst wird hierbei eine erste Regenerierphase beschrieben, in der der erste Keimfilter 1 regeneriert wird, während der zweite Keimfilter 2 das ihm zugeführte Rohwasser desinfiziert und in den Produktwasserablauf 7 leitet. Eine zweite Regenerierphase, in der der zweite Keimfilter 2 regeneriert wird, während der erste Keimfilter 1 das ihm zugeführte Rohwasser desinfiziert und in den Produktwasserablauf 7 leitet, verläuft analog dazu.

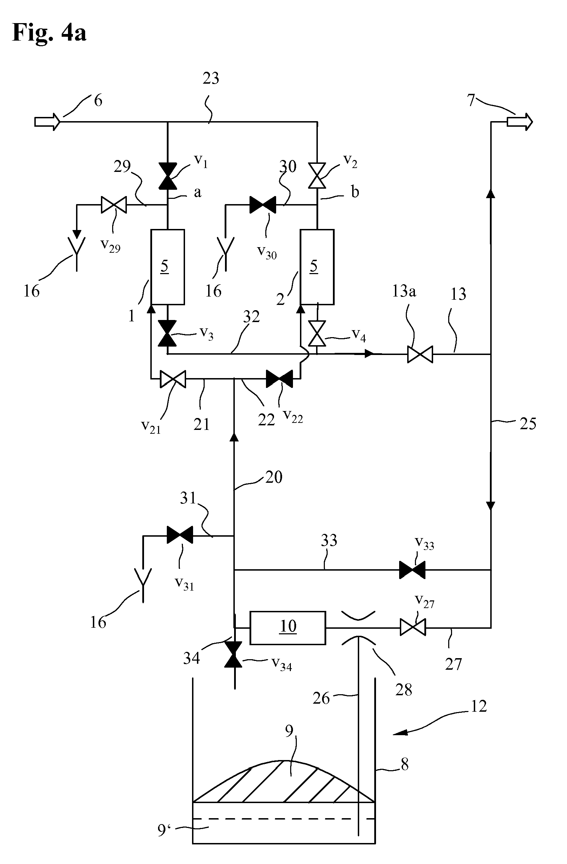

Ein erster Schritt der ersten Regenerierphase ist in Figur 4a schematisch dargestellt. In diesem ersten Schritt wird der erste Keimfilter 1 mit der wässrigen Regenerierlösung beaufschlagt. Hierfür werden das stromaufwärtige Ventil V1 und das stromabwärtige Ventil V3 des ersten Keimfilters 1 in der Leitung der Parallelschaltung geschlossen, während das zweite Ventil V2, welches stromabwärts des zweiten Keimfilters 2 in der Leitung der Parallelschaltung angeordnet ist, und das vierte Ventil V4 offen bleiben. Das der Parallelschaltung der beiden Keimfilter 1, 2 zugeleitete Rohwasser strömt deshalb nur durch den zweiten Keimfilter 2 und von dort durch das geöffnete vierte Ventil V4 und bei geöffnetem Ventil 13a in die Leitung 13 und von dort in die Produktwasserleitung 25. In der Produktwasserleitung 25 wird der vom zweiten Keimfilter 2 kommende desinfizierte Wasserstrom in zwei Teilströme aufgeteilt. Ein ersten Teilstrom r strömt dabei zum Produktwasserablauf 7 und ein zweiter Teilstrom s strömt durch die Produktwasserleitung 25 zur Regeneriereinrichtung 12 und dort in die Regenerierleitung 27. Das sich in der Regenerierleitung 27 befindliche Ventil V27 ist dabei geöffnet. Das durch die Regenerierleitung 27 strömende Wasser saugt über die oben bereits beschriebene Wirkung des Injektors 28 die (konzentrierte) Regeneriersalzlösung 9' (Kochsalzsole) aus dem Regeneriermittelreservoir 8 an und leitet diese zur Elektrolyseeinrichtung 10, welche die Regeneriersalzlösung in die wässrige Regenerierlösung umsetzt. Die wässrige Regenerierlösung enthält in dem bevorzugten Ausführungsbeispiel, bei dem es sich bei dem Regeneriermittel 9 um Kochsalz (NaCl) handelt, einerseits im Wasser gelöste Natrium- und Chlorid-Ionen sowie im Wasser als hypochlorige Säure dissoziiertes Chlorgas.

Die wässrige Regenerierlösung wird über die Regeneriermittelleitungen 20 und 21 bei geöffnetem Ventil V21 und geschlossenem Ventil V22 dem ersten Keimfilter 1 zugeführt und dort durch das Filtermaterial 5 geleitet. Dabei wird das Filtermaterial 5 wie oben beim Ausführungsbeispiel der Figuren 1 und 2 bereits beschrieben regeneriert. Das in der Abzweigung 29 angeordnete Ventil V29 ist dabei geöffnet, so dass die wässrige Regenerierlösung durch das geöffnete Ventil V29 in den Abwasserkanal 16 abfließen und dadurch entsorgt werden kann.

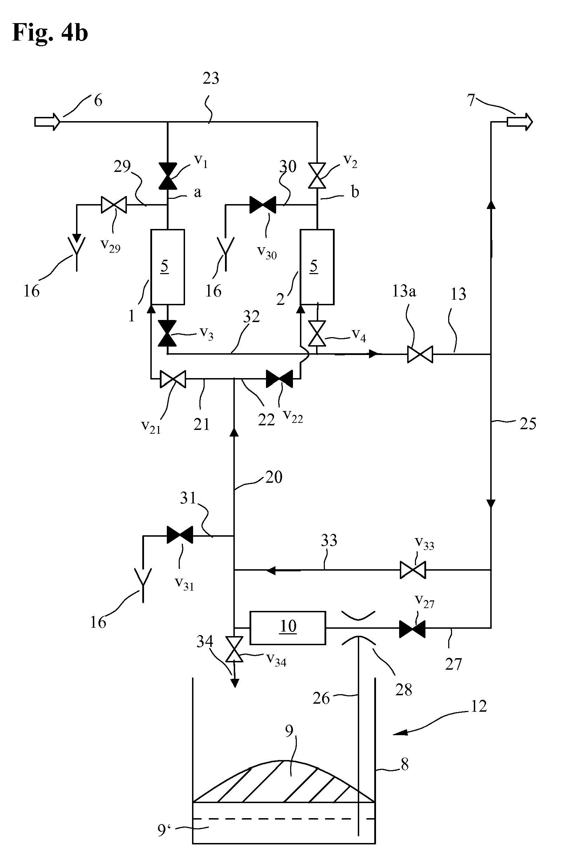

In einem zweiten Schritt der ersten Regenerierphase zur Regeneration des ersten Keimfilters 1, welcher schematisch in Figur 4b gezeigt ist, wird die sich in den Leitungen sowie in dem ersten Keimfilter 1 befindliche wässrige Regenerierlösung ausgespült. Nach Beendigung des ersten Schritts der Regenerierphase wird hierfür zunächst die Einleitung der Regeneriersalzlösung 9' mittels des Injektors 28 in die Regenerierleitung 27 gestoppt, wie bereits beim Ausführungsbeispiel der Figuren 1 und 2 und insbesondere der Figur 2b beschrieben. Durch Schließen des sich in der Regenerierleitung 27 befindlichen Ventil V27 und Öffnen der parallel zur Regenerierleitung 27 verlaufenden Bypassleitung 33 wird eine direkte Verbindung zwischen der Produktwasserleitung 25 und der Regeneriermittelleitung 20 (unter Umgehung der Regeneriereinrichtung 12) erzeugt. Der von dem zweiten Keimfilter 2 kommende (desinfizierte) Teilstrom des Wassers kann somit als Spülwasser von der Produktwasserleitung 25 durch die Bypassleitung 33 in die Regeneriermittelleitung 20 und von dort über die geöffnete Regeneriermittelleitung 20 in den ersten Keimfilter 1 strömen. Auf diese Weise durchströmt das (desinfizierte) Spülwasser das Filtermaterial 5 des ersten Keimfilters 1, um den ersten Keimfilter 1 zu spülen und die sich darin befindliche (Rest)menge an wässriger Regenerierlösung zu verdrängen. Das durch den ersten Keimfilter 1 geleitete Spülwasser wird schließlich bei geöffnetem Ventil V29 über den Abzweig 29 wiederum in den Abwasserkanal 16 geleitet.

Ein Teilstrom des in der Regeneriermittelleitung 20 geführten Wassers zweigt dabei - wie beim Ausführungsbeispiel der Figuren 1 und 2 - in die Abzweigung 34 ab und fließt von dort durch das geöffnete Ventil V34 in das Regeneriermittelreservoir 8, um den Wasservorrat im Regeneriermittelreservoir 8 aufzufüllen, bis das ursprünglich darin vorhandene Niveau an konzentrierter Regeneriersalzlösung 9' wieder vorhanden ist.

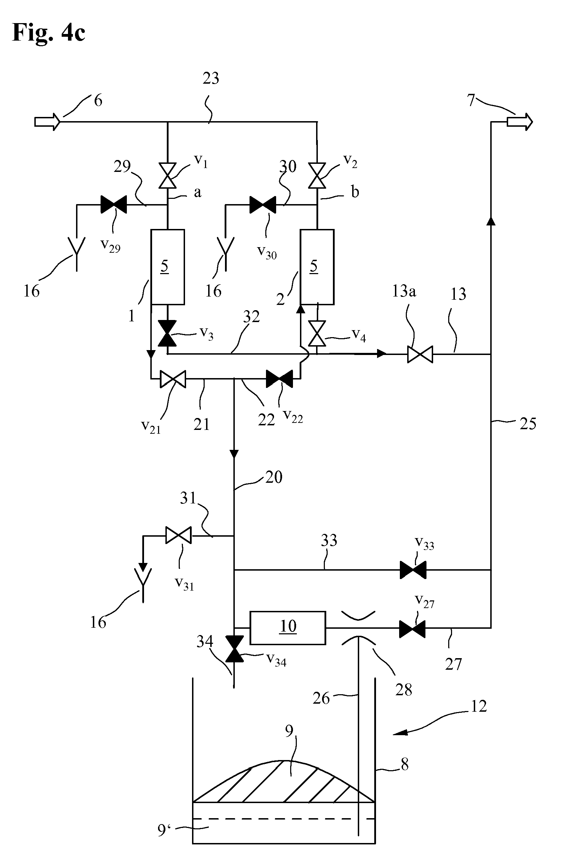

Anschließend beginnt ein in Figur 4c schematisch gezeigter dritter Schritt der Regenerierphase, in dem - wie beim Ausführungsbeispiel der Figuren 1 und 2 , insbesondere Figur 2c - in dem Keimfilter 1 ein Erstfiltrat erzeugt und dieses in den Abwasserkanal 16 geleitet wird. Hierfür werden wieder die Ventile V1 und V31 geöffnet und die Ventile V33 und V34 geschlossen, so dass das Erstfiltrat bei geöffnetem Ventil V31 durch den Abzweig 31 in den Abwasserkanal 16 fließen kann. Damit ist die erste Regenerierphase für den ersten Keimfilter 1 beendet und die Vorrichtung kann wieder in der in Fig. 3 gezeigten Betriebsphase betrieben werden, in der sich sowohl der erste Keimfilter 1 als auch der zweite Keimfilter 2 in Betrieb befinden, um desinfiziertes Wasser zu erzeugen.

In entsprechender Weise kann dann in einer zweiten Regenerierphase auch eine Regenerierung des zweiten Keimfilters 2 durchgeführt werden, während sich der erste Keimfilter 1 in Betrieb befindet. Die Einleitung der Regenerierphasen erfolgt zweckmäßig automatisiert durch eine Steuerungseinrichtung der Vorrichtung, welche die Regenerierphasen bspw. nach einer vorgegebenen Dauer einer Betriebsphase oder nach Erreichen einer vorgegebenen Durchflussmenge von Wasser während der Betriebsphase durch den ersten bzw. den zweiten Keimfilter automatisch einleitet.

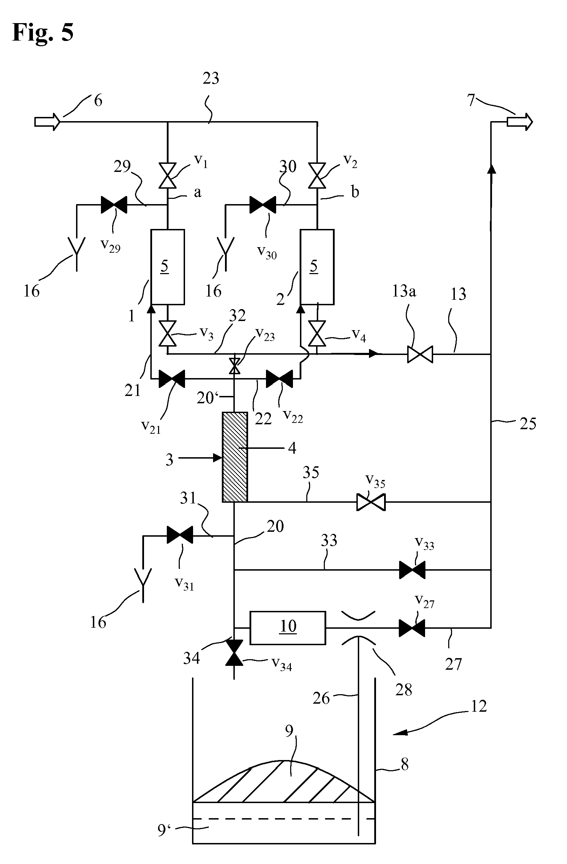

In Figur 5 ist ein drittes Ausführungsbeispiel einer erfindungsgemäßen Vorrichtung gezeigt, welches auf dem Ausführungsbeispiel der Figur 3 basiert, weshalb in Figur 5 gleiche Teile mit denselben Bezugszeichen wie in Figur 3 versehen sind. In dem Ausführungsbeispiel der Figur 5 umfasst die Vorrichtung zusätzlich zu den beiden Keimfiltern 1, 2 noch eine Wasserenthärtungseinrichtung 3 mit einem regenerierbaren Ionenaustauscherharz 4, insbesondere einem Kationenharz. Die Wasserenthärtungseinrichtung 3 ist dabei in der Regeneriermittelleitung 20 angeordnet bzw. mit dieser verbunden und unterteilt diese in einen unteren Abschnitt (20) und einen oberen Abschnitt (20'), dessen Ende sich in die Regeneriermittelleitungen 21 und 22 verzweigt. Das Ende des oberen Abschnitts 20' der Regeneriermittelleitungen 20 ist ferner über ein weiteres Ventil V23 mit der Leitung 32 verbunden, welche mit der Leitung 13 verbunden ist und in die Produktwasserleitung 25 und zum Produktwasserablauf 7 führt. Die Produktwasserleitung 25 ist mit einem (in Strömungsrichtung beim Betrieb der Vorrichtung stromabwärtigen) Ausgang der Enthärtungseinrichtung 3 über eine Bypassleitung 35 mit einem Ventil V35 verbunden.

In der Betriebsphase der Vorrichtung von Figur 5 ist das Ventil 13a geschlossen und das Ventil V35 offen. Dadurch werden die beiden Teilströme a, b des aus den Keimfiltern 1, 2 strömenden Wassers über den oberen Abschnitt 20' der Regeneriermittelleitung zu einem Eingang der Wasserenthärtungseinrichtung 3 geleitet. Die beiden Teilströme a, b strömen in der Wasserenthärtungseinrichtung 3 durch bzw. über den darin angeordneten Ionenaustauscher 4 (Kationenharz), wodurch dem Wasser die härtebildenden Kationen (Ca- und Mg-Ionen) entzogen und gegen Kationen des Ionenaustauschers ausgetauscht werden. Das auf diese Weise enthärtet Wasser strömt schließlich durch einen Ausgang aus der Wasserenthärtungseinrichtung 3 und in die mit dem Ausgang verbundene Bypassleitung 35 und von dort (bei geöffnetem Ventil V35) in die Produktwasserleitung 25 und zum Produktwasserablauf 7.

Die Regenerierung der Keimfilter und des Ionenaustauschers 4 der Wasserenthärtungseinrichtung 3 erfolgt bei diesem Ausführungsbeispiel analog zu dem Ausführungsbeispiel der Figur 3, wobei die Regenerierung eines der beiden Keimfilter 1 oder 2 gleichzeitig mit der Regenerierung des Ionenaustauschers 4 der Wasserenthärtungseinrichtung 3 vorgenommen werden kann, während der andere Keimfilter (2 oder 1) sich im Filterbetrieb befindet.

Zur Regenerierung des ersten Keimfilters 1 und des Ionenaustauschers 4 der Wasserenthärtungseinrichtung 3 werden im ersten Schritt der Regenerierphase die Ventile V3, V22, V23, V33 und V35 geschlossen und die Ventile 13a, V2, V4, V21, V27 und V29 geöffnet. Die Regenerierlösung wird zunächst über den unteren Abschnitt der Regeneriermittelleitung 20 in die Wasserenthärtungseinrichtung 3 eingeleitet und dort durch bzw. über den darin angeordneten Ionenaustauscher 4 (Kationenharz) geleitet. Dabei werden dem erschöpften Ionenaustauscher 4 die dort bei der Wasserenthärtung angelagerten härtebildenden Kationen (Ca- und Mg-Ionen) entzogen und gegen Kationen aus der Regenerierlösung (im Falle einer NaCl-Regenerierlösung Na-Ionen) ausgetauscht, so dass der Ionenaustauscher 4 wieder mit nicht-härtebildenden Kationen (Na-Ionen) beladen wird.

Die durch die Wasserenthärtungseinrichtung 3 geleitete Regenerierlösung wird über den oberen Abschnitt 20' der Regeneriermittelleitung in die mit diesem verbundene Regeneriermittelleitung 21 geleitet, welche mit dem ersten Keimfilter 1 verbunden ist. Wie in dem Ausführungsbeispiel der Figur 3 wird die Regenerierlösung durch den ersten Keimfilter 1 geleitet, um dessen Filtermaterial 5 zu regenerieren. Danach erfolgt der zweite Schritt und der dritte Schritt der Regenerierphase, wie beim Ausführungsbeispiel der Vorrichtung von Figur 3 anhand der Figuren 4b und 4c beschrieben (in analoger Weise), um die Regenerierlösung aus dem regenerierten ersten Keimfilter 1 und der regenerierten Wasserenthärtungseinrichtung 3 zu entfernen und um das Erstfiltrat auszuscheiden.

In den Figuren 6 und 7 sind Ausführungsbeispiele für Keimfilter gezeigt, wie sie in den oben beschriebenen Vorrichtungen verwendet werden können. Das Ausführungsbeispiel der Figur 6 zeigt dabei einen als Wickelfilter ausgebildeten Keimfilter mit einem zu einem Zylinder aufgewickelten Filtermaterial 5, bei dem es sich bspw. um ein flächiges Papier- oder Textilmaterial handeln kann, das in wässriger Umgebung ein elektrokinetisches Potential (Zeta-Potential) aufweist.

Zweckmäßig ist das zylindrisch aufgewickelte Filtermaterial 5 in eine Filterkartusche integriert, welche bspw. in eine der oben beschriebenen Vorrichtungen austauschbar eingesetzt werden kann. Hierfür ist wie in Figur 6 gezeigt das zylindrisch aufgewickelte Filtermaterial in einem rohrförmigen Gehäuses 50 aus einem wasserdichten Material angeordnet. Das zu filtrierende Wasser tritt dabei durch die offenen Stirnseiten des Gehäuse 50 in den Filter ein und strömt durch im Filtermaterial 5 ausgebildete Kanäle, welche durch benachbarte Lagen des zylindrisch aufgewickelten Filtermaterials 5 gebildet sind.

Um eine große effektive Filterfläche zu erzeugen, ist es dabei zweckmäßig, wenn der zylindrisch ausgebildete Wickelfilter eine Zylinderlänge aufweist, welche größer ist als der Zylinderdurchmesser D.

Ein als Wickelfilter ausgebildeter Keimfilter setzt sich dabei bevorzugt aus aufgewickelten und dadurch übereinander liegenden Lagen eines flächigen und elektroaktiven Papier- oder Textilmaterials zusammen, welche durch (in Figur 6 nicht gezeigte) Abstandshalter voneinander getrennt sind. Die Abstandshalter sind dabei zwischen benachbarten Lagen des Wickelfilters angeordnet und erstrecken sich in Längsrichtung des Filters (entlang der Achse des Zylinders). Dadurch werden zwischen benachbarten Lagen des Wickelfilters und den Abstandshaltern Kanäle ausgebildet, die sich in Längsrichtung des Filters erstrecken und zumindest im Wesentlichen parallel zueinander verlaufen. Bei den Abstandshaltern kann es sich um längliche, beispielsweise stabförmige Abstandshalter handeln, die in Längsrichtung des Filters angeordnet sind. Bevorzugt weisen die Abstandshalter eine wellenförmige oder eine zick-zack-förmige Struktur auf, ähnlich der Struktur einer Wellpappe. Besonders zweckmäßig ist es, die Abstandshalter ebenso wie die Lagen des Wickelfilters aus einem elektroaktiven Material (mit einem in wässriger Umgebung positiven oder negativen Zeta-Potential) zu fertigen. Dadurch wird gewährleistet, dass die Kanäle des Filters allseitig von Kanalwänden begrenzt werden, die durch ein in wässriger Umgebung elektroaktives Material (d.h. durch ein Material mit einem elektrokinetischen (Zeta)-Potenzial), begrenzt werden. Auf diese Weise wird eine große effektive und aktive Filterfläche bereitgestellt. Insgesamt wirkt der Keimfilter dabei als Tiefenfilter, d.h. die Abscheidung der Teilchen (Mikroorganismen) erfolgt durch Elektroadsorption am elektroaktiven Filtermaterial im Innern des Filtermediums.

In Figur 6 ist ein als zylindrischer Plisseefilter ausgebildeter Keimfilter gezeigt. Zur Herstellen eines solchen Filters kann bspw. ein flächiges Papier- oder Textilmaterial zunächst plisseeförmig gefaltet werden und anschließend werden die Ränder einer plisseeförmig gefalteten Lage des flächigen Filtermaterials zur Ausbildung eines zylindrischen Filterplissee miteinander verbunden, so dass ein Zylindermantel entsteht. Wie in Figur 6 dargestellt, können mehrere solcher Zylinder Z1, Z2 mit unterschiedlichen Durchmessern ineinander gesteckt werden, um eine noch größere effektive Filteroberfläche zu erhalten. Zweckmäßig wird das zylindrische Filterplissee des äußeren Zylinders Z2 oder jedes Zylinders Z1, Z2 in einem haltenden Netzkäfig 51 angeordnet. Der Netzkäfig 51 kann dabei bspw. aus einem Kunststoff- oder Drahtgeflecht gebildet sein und ist an einem scheibenförmigen Boden 52 befestigt. Zur Verdeutlichung ist in Figur 6 der obere Abschnitt des äußeren Zylinders Z2 weg gelassen und der Netzkäfig ist teilweise aufgerollt gezeigt. Bei einem solchen Plisseefilter strömt das Wasser bspw. an der äußeren Zylindermantelfläche ein und sammelt sich dann als Filtrat im Inneren des Plisseefilters, von wo es mit einem Sammelrohr axial abgeführt wird. Eine Filtration in umgekehrter Richtung, also von innen nach außen, ist ebenfalls möglich.

Die Erfindung ist nicht auf die zeichnerisch dargestellten und oben beschriebenen Ausführungsbeispiele beschränkt. So ist es beispielsweise möglich, von den Vorteilen der Erfindung auch in anderen Vorrichtungen Gebrauch zu machen, welche wenigstens einen Keimfilter enthalten, der ein elektroaktives Filtermaterial mit einem in wässriger Umgebung elektrokinetischen, insbesondere elektropositiven Potential (Zeta-Potential) aufweist, an dem sich im Wasser enthaltene Mikroorganismen, insbesondere Viren und Keime, durch Elektroadsorption anlagern.

## Patentansprüche

1. Verfahren zur Regenerierung eines als Adsorptionsfilter ausgebildeten Keimfilters (1, 2) zur Desinfizierung von Wasser, wobei der Keimfilter (1, 2) ein elektroaktives Filtermaterial (5) mit einem in wässriger Umgebung elektrokinetischen, insbesondere elektropositiven Potential (Zeta-Potential) enthält, an dem sich im Wasser enthaltene Mikroorganismen, insbesondere Viren und Keime, durch Elektroadsorption anlagern, **dadurch gekennzeichnet, dass** der Keimfilter (1, 2) zur Regenerierung mit einer wässrigen Regenerierlösung beaufschlagt wird, wobei die Regenerierlösung ein Chloridsalz enthält.

2. Verfahren nach Anspruch 1, **dadurch gekennzeichnet, dass** die wässrige Regenerierlösung einen Salzgehalt von wenigstens 3 Gew. % und bevorzugt von wenigstens 5 Gew. % aufweist.

3. Verfahren nach einem der voranstehenden Ansprüche, **dadurch gekennzeichnet, dass** es sich bei der Regenerierlösung um eine wässrige Lösung eines Chloridsalzes und insbesondere um eine Kochsalzlösung handelt und dass die wässrige Regenerierlösung bevorzugt neben den gelösten Ionen des Chloridsalzes, insbesondere Alkali- oder Erdalkali- sowie den Chlorid-Ionen, im Wasser als hypochlorige Säure dissoziiertes Chlorgas enthält.

4. Verfahren nach einem der voranstehenden Ansprüche, **dadurch gekennzeichnet, dass** zur Erzeugung der wässrigen Regenerierlösung eine konzentrierte, bevorzugt gesättigte, Lösung eines Chloridsalzes einer Elektrolyseeinrichtung (10) zugeführt und von dieser in die wässrige Regenerierlösung umgesetzt wird.

5. Verfahren nach einem der voranstehenden Ansprüche, **dadurch gekennzeichnet, dass** es sich bei dem Filtermaterial (5) um einen elektropositiven Textil-Verbundstoff handelt und/oder dass das Filtermaterial ein Metalloxid, insbesondere Aluminumoxid und/oder Aluminumhydroxid und/oder Böhmit und/oder Zirkonoxid und/oder Zirkoniumhydroxid, und/oder ein Silikat, insbesondere Aluminium- oder CalciumSilikat, enthält und/oder dass das Filtermaterial (5) ein Gemisch von Mikro- oder Nanoteilchen oder -Fasern eines Metalloxids mit einem Trägermaterial, insbesondere aus Polymer-, Carbon- oder Glasfasern oder einer Mischung davon, enthält oder aus einem solchen Gemisch besteht und/oder dass das Filtermaterial (5) ein keramisches Trägermaterial aufweist, welches mit einer Beschichtung versehen ist, die ein Metalloxid und/oder ein Metallhydroxid enthält.

6. Verfahren nach einem der voranstehenden Ansprüche, **dadurch gekennzeichnet, dass** der Keimfilter (1, 2) nach der Beaufschlagung mit der Regenerierlösung durch Einleiten einer Spüllösung gespült wird, um die sich im Keimfilter (1, 2) befindliche Regenerierlösung zu verdrängen und um die vom Filtermaterial (5) abgelösten Mikroorganismen aus dem Keimfilter (1, 2) auszuspülen.

7. Verfahren nach Anspruch 1 oder 6, **dadurch gekennzeichnet, dass** der Keimfilter (1, 2) im Betrieb von dem Rohwasser in einer vorgegebenen Filtrierrichtung durchströmt wird und dass bei der Regenerierung des Keimfilters (1, 2) die wässrige Regenerierlösung in zur Filtrierrichtung entgegengesetzter Richtung durch den Keimfilter (1, 2) geleitet wird und/oder dass beim Spülen des Keimfilters (1, 2) die Spüllösung zunächst in einer Strömungsrichtung durch den Keimfilter (1, 2) geleitet wird, welche entgegengesetzt zu der vorgegebenen Filtrierrichtung verläuft und dass anschließend eine Spülflüssigkeit, insbesondere Rohwasser, als Erstfiltrat in Filtrierrichtung durch den Keimfilter (1, 2) geleitet und das Erstfiltrat schließlich in einen Abwasserkanal (16) geleitet wird.

8. Vorrichtung zur Desinfizierung von Wasser, mit mindestens einem als Adsorptionsfilter ausgebildeten ersten Keimfilter (1), der ein Filtermaterial (5) mit einem in wässriger Umgebung elektrokinetischen, insbesondere elektropositiven Potential (Zeta-Potential) enthält, an dem sich im Wasser enthaltene Mikroorganismen, insbesondere Viren und Keime, durch Elektroadsorption anlagern, **dadurch gekennzeichnet, dass** eine Regeneriereinrichtung (12) vorgesehen ist, welche zur Regenerierung des ersten Keimfilters (1) in vorgegebenen Regenerierphasen eine wässrige Regenerierlösung, welche ein Chloridsalz enthält, durch das Filtermaterial (5) des Keimfilters (1) leitet.

9. Vorrichtung nach Anspruch 8, **dadurch gekennzeichnet, dass** die Regeneriereinrichtung (12) ein Regeneriermittelreservoir (8), in dem ein das Chloridsalz enthaltendes Regeneriermittel (9) bevorratet ist, sowie einen Injektor (28) umfasst, welcher eine wässrige Lösung des Regeneriermittels (9) zu dem Keimfilter (1) fördert.

10. Vorrichtung nach Anspruch 9, **dadurch gekennzeichnet, dass** die Regeneriereinrichtung (12) weiterhin eine Elektrolyseeinrichtung (10) umfasst, welche eine wässrige Lösung eines Chloridsalzes, insbesondere eine gesättigte oder verdünnte Kochsalzsole, in eine wässrige Regenerierlösung umsetzt, welche Alkali- oder Erdalkali-Ionen, insbesondere Natriumionen, sowie Chlorid-Ionen und im Wasser als hypochlorige Säure dissoziiertes Chlorgas enthält.

11. Vorrichtung nach einem der Ansprüche 8 bis 10, **dadurch gekennzeichnet, dass** die Vorrichtung neben dem ersten Keimfilter (1) wenigstens einen zweiten Keimfilter (2) umfasst, der im Betrieb parallel zum ersten Keimfilter (1) geschaltet ist.

12. Vorrichtung nach einem der Ansprüche 8 bis 11, **dadurch gekennzeichnet, dass** die Vorrichtung neben dem ersten Keimfilter (1) und/oder dem zweiten Keimfilter (2) noch eine Wasserenthärtungseinrichtung (3) umfasst, welche einen Ionenaustauscher (4) enthält und in Serie zu dem ersten Keimfilter (1) und/oder dem zweiten Keimfilter (2) oder der Parallelschaltung des ersten Keimfilters (1) und des zweiten Keimfilters (2) geschaltet ist.

13. Vorrichtung nach einem der Ansprüche 11 oder 12, **dadurch gekennzeichnet, dass** die Vorrichtung einen Rohwasserzulauf (6) und einen Produktwasserablauf (7) aufweist und dass die beiden Keimfilter (1, 2) in einer Parallelschaltung stromaufwärts mit dem Rohwasserzulauf (6) und stromabwärts mit der Wasserenthärtungseinrichtung (3) in Verbindung stehen.

14. Vorrichtung nach einem der Ansprüche 11 bis 13, wobei in einer Betriebsphase der Vorrichtung zum Desinfizieren des über den Rohwasserzulauf (4) zugeführten Wassers der Wasserstrom zumindest in zwei Teilströme (a, b) aufgeteilt und ein erster Teilstrom (a) durch den ersten Keimfilter (1) und ein zweiter Teilstrom (a) durch den zweiten Keimfilter (2) geleitet wird und die beiden Teilströme stromabwärts der Keimfilter (1, 2) zum Produktwasserablauf (7) geleitet werden.

15. Vorrichtung nach einem der Ansprüche 11 bis 14, wobei in einer Regenerierphase zumindest ein Teilstrom des vom Rohwasserzulauf (4) zugeführten Wassers durch einen der beiden Keimfilter (1 oder 2) geleitet wird, während der andere Keimfilter (2 oder 1) regeneriert wird.
